(19) Europäisches Patentamt
European Patent Office
Office européen des brevets

(11) **EP 2 329 507 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(21) Anmeldenummer: **09782146.6**

(22) Anmeldetag: **25.08.2009**

(51) Int Cl.:
*H01G 9/052* (2006.01)    *B22F 1/00* (2006.01)
*C22B 34/24* (2006.01)    *B22F 3/11* (2006.01)
*B22F 3/12* (2006.01)    *B22F 5/00* (2006.01)
*C01G 33/00* (2006.01)    *H01G 9/042* (2006.01)

(86) Internationale Anmeldenummer:
**PCT/EP2009/060912**

(87) Internationale Veröffentlichungsnummer:
**WO 2010/034577 (01.04.2010 Gazette 2010/13)**

(54) **VENTILMETALL- UND VENTILMETALLOXID-AGGLOMERATPULVER UND VERFAHREN ZU DEREN HERSTELLUNG**

VALVE METAL AND VALVE METAL OXIDE AGGLOMERATE POWDERS AND METHOD FOR THE PRODUCTION THEREOF

POUDRE D AGGLOMÉRAT DE MÉTAL À EFFET DE VALVE ET D OXYDE DE MÉTAL À EFFET DE VALVE ET SON PROCÉDÉ DE FABRICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.09.2008 DE 102008048614**

(43) Veröffentlichungstag der Anmeldung:
**08.06.2011 Patentblatt 2011/23**

(73) Patentinhaber: **H.C. Starck GmbH**
**38642 Goslar (DE)**

(72) Erfinder:
• **SCHNITTER, Christoph**
**31188 Holle (DE)**
• **BRUMM, Holger**
**38644 Goslar (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
EP-A- 1 505 611    WO-A-98/37249
DE-A1- 10 307 716    DE-A1- 19 855 998

**Beschreibung**

Die vorliegende Erfindung betrifft Ventilmetall- und Ventilmetalloxid-Agglomeratpulver (Ventilmetalle sind Nb, Ta, Ti, Zr, Hf, V, Mo, W, Al) und deren Mischungen und Legierungen, insbesondere von Niob und/oder Tantal oder Niobsuboxid, zur Herstellung von Kondensatoren, sowie Sinteranodenkörper für Kondensatoren.

Als Festelektrolytkondensatoren mit sehr großer aktiver Kondensatorfläche und daher kleiner, für die mobile Kommunikationselektronik geeigneter Bauweise werden überwiegend solche mit einer auf einem entsprechenden leitfähigen Träger aufgebrachten Niob- bzw. Tantalpentoxidsperrschicht eingesetzt unter Nutzung von deren Stabilität ("Ventilmetall"), der vergleichsweise hohen Dielektrizitätskonstanten und der über die elektrochemische Erzeugung mit sehr gleichmäßiger Schichtdicke herstellbaren isolierende Pentoxidschicht. Als Träger werden metallische oder leitfähige niedere oxidische (Suboxide) Vorläufer der entsprechenden Pentoxide eingesetzt. Der Träger, der zugleich die eine Kondensatorelektrode (Anode) darstellt, besteht aus einer hochporösen, schwammartigen Struktur, die durch Versintern feinstteiliger Primärstrukturen bzw. bereits schwammartiger Sekundärstrukturen hergestellt wird. Die Oberfläche der Trägerstruktur wird elektrolytisch zum Pentoxid oxidiert ("formiert"), wobei die Dicke der Pentoxidschicht durch die Maximalspannung der elektrolytischen Oxidation ("Formierspannung") bestimmt wird. Die Gegenelektrode wird durch Tränken der schwammartigen Struktur mit Mangannitrat, das thermisch zu Mangandioxid umgesetzt wird, oder mit einem flüssigen Vorläufer eines Polymerelektrolyten oder einer Polymerdispersion eines leitfähigen Polymers und Polymerisation, beispielsweise PEDT, erzeugt. Die elektrischen Kontakte zu den Elektroden werden auf der einen Seite durch einen bei der Erzeugung der Trägerstruktur eingesinterten Tantal- oder Niobdraht und auf der anderen Seite durch die gegen den Draht isolierte metallische Kondensatorhülle dargestellt.

Die Kapazität C eines Kondensators berechnet sich nach folgender Formel:

$$C = (F \cdot \varepsilon) / (d \cdot V_F)$$

wobei F die Kondensatoroberfläche, $\varepsilon$ die Dielektrizitätskonstante, d die Dicke der Isolatorschicht pro Volt Formierspannung und $V_F$ die Formierspannung bezeichnet.

DE 198 55 998 A1 offenbart adhäsiv gebundene Agglomerate metallischer und/oder keramischer Pulver mit einem Porenvolumen von 80 bis 90 %.

EP 1 505 611 A2 beschreibt ein Verfahren zur Herstellung von Kondensatoranoden auf Basis von Niobsuboxid durch Pressen von Niobsuboxidteilchen zu Grünkörpern und Sintern der Grünkörper zu porösen Anodenkörpern, wobei das Niobsuboxidpulver vor dem Pressen mit Ventilmetallpulver als Press- und Sinterhilfsmittel versetzt wird.

EP 1 291 100 A1 offenbart ein Niob- oder Tantalpulver umfassend Aggregate, die aus aggregierten Niob- oder Tantalprimärpartikeln bestehen und die eine Porenverteilung mit einem Peak in einem Bereich von 1 bis 20 μm aufweisen.

Durch die Versinterung feinstteiliger Primär- und/oder Sekundärstrukturen wird eine sehr große aktive Kondensatoroberfläche geschaffen, allerdings entstehen auch geschlossene Poren, deren Oberfläche nicht aktiv ist. Die geschlossenen Poren vermindern daher die volumenbezogene Kapazität der aus den Pulvern hergestellten Kondensatoren. Im Falle des Einsatzes von Sekundärstrukturen ohne geschlossene Poren können aufgrund der höheren volumenbezogenen Kapazität höhere Sintertemperaturen bei der Herstellung der Anodenkörper ohne Kapazitätsverlust verwendet werden, was gegenüber dem Einsatz von herkömmlichen Pulvern wiederum zu einer Verstärkung der Sinterhälse und zu einer besseren Drahtanbindung führt. Eine bessere Drahtanbindung und stärkere Sinterhälse bewirken einen stabileren Anodenkörper und eine bessere Leckstrom-, ESR- und Stoßstrom-Performance, genannt auch Surge-Performance des Kondensators.

Es ist daher wünschenswert, die Zahl und das Volumen der geschlossenen Poren in dem Kondensator möglichst niedrig zu halten.

Ein Maß für die Offenporigkeit einer Kondensatoranode und der zur Kondensatorherstellung einzusetzenden Sekundärstrukturen (Agglomeratpulver) ist deren Skelettdichte, die als Verhältnis von Masse des Sinterkörpers zur Summe von Volumen des Festkörperanteils und Volumen der geschlossenen Poren definiert ist. Die Messung der Skelettdichte der Anodenstrukturen erfolgt mittels Quecksilber-Intrusions-Porosimetrie, genannt auch Quecksilberporosimetrie. Die üblichen Sinterverfahren zur Erzeugung von Kondensatoranoden erreichen Skelettdichten von 80 bis 88 % der theoretischen Feststoffmaterialdichte.

Es sind bereits Verfahren zur Beeinflussung der Porenstruktur von Kondensatoranoden aus Niob oder Tantal zur Erzeugung breiter oder bimodaler Porengrößenverteilungen bekannt geworden, bei denen während des Sinterns sogenannte Porenbildner eingesetzt werden. Dabei werden einerseits (EP 1291100 A1, WO 2006/057455) als Porenbildner sich beim Erhitzen auf die Sintertemperatur zersetzende oder verdampfende organische Substanzen oder nach dem Sintern durch Säurelaugung aus der Sinterstruktur entfernbare Metalle oder Metalloxide oder Metallhydride eingesetzt und andererseits (DE 19855998 A1) gasförmige Porenbildner, mittels derer adhäsiv gebundene hochporöse Agglomerate gewonnen werden, die beim Sintern ihre Porosität im Wesentlichen erhalten.

Bei diesen Verfahren werden die Porenbildner in relativ späten Verfahrensstadien, in denen bereits Sinteragglomerate mit geschlossenen Poren vorliegen, eingesetzt, so dass eine wirksame Verhinderung der Bildung geschlossener Poren nicht erfolgt.

Ferner ist, soweit organische Porenbildner eingesetzt werden, die Kontamination des Kondensatoranodenkörpers mit Kohlenstoff nachteilig. Und soweit Metalle oder Metallverbindungen eingesetzt werden, ist neben einer möglichen Kontamination ein erheblicher Aufwand zu deren Entfernung aus den gesinterten Strukturen erforderlich.

Aufgabe der vorliegenden Erfindung ist es, Kondensator-Agglomeratpulver zur Verfügung zu stellen, die die Herstellung von Anodenkörpern mit hoher Skelettdichte ermöglichen.

Aufgabe der vorliegenden Erfindung ist es auch, Anoden für Festelektrolytkondensatoren zur Verfügung zu stellen, die eine hohe Skelettdichte und damit eine hohe Volumeneffizienz (Kapazität/Volumen, CV/cm$^3$) aufweisen.

Weiterhin ist Aufgabe der Erfindung, Anodenkörper zur Verfügung zu stellen, die nach Weiterverarbeitung zum Kondensator eine bessere Drahtzugfestigkeit, Leckstrom-, ESR- und/oder Stoßstrom-Performance aufweisen.

Die Gegenstände der vorliegenden Erfindung sind in den Ansprüchen definiert. Ventilmetall- und/oder Ventilmetallsuboxid-Anodenkörper, bevorzugt Niob-, Tantal- und Niobsuboxid-Anodenkörper, weiter bevorzugt Niobsuboxid-Anodenkörper der Formel $NbO_x$ mit $0,7<x<1,3$, besonders bevorzugt mit $0,8<x<1,1$, mit einer Skelettdichte von mehr als 88% der theoretischen Dichte, vorzugsweise von mehr als 90%, insbesondere bevorzugt mehr als 92% der theoretischen Dichte, sind herstellbar. Skelettdichten von bis zu 94% und mehr der theoretischen Dichte des (kompakten) Anodenmaterials sind erzielbar. Bei den Anodenkörpern beträgt das kumulierte Volumen der geschlossenen Poren weniger als 12%, vorzugsweise weniger als 10, insbesondere bevorzugt weniger als 8%, des Volumens des (kompakten) Anodenmaterials.

Als Ventilmetalle im Sinne der Erfindung werden die Metalle der Gruppe Niob, Tantal und Titan verstanden.

Die erfindungsgemäßen Agglomeratpulver bestehen bevorzugt aus versinterten Primärteilchen einer aus elektronenmikroskopischen Aufnahmen bestimmten mittleren Querschnittsabmessung von 0,1 bis 2μm und einer nach ASTM B 822 ("Mastersizer", Benetzungsmittel Daxad 11) bestimmten Agglomeratgröße von D10 von 3 bis 50μm, D50 von 20 bis 200μm, und D90 von 30 bis 400μm. Die Agglomeratpulverteilchen können beliebige Formen aufweisen, wie Kugeln, deformierte Kugeln, Fasern, Chips, irreguläre Morphologie usw., bevorzugt sind kugelförmige Agglomeratpulverteilchen, wobei alle beschriebenen Formen ein geringes Volumen geschlossener Poren aufweisen. Die Agglomeratpulver weisen ein gutes Fließvermögen (nach Hall, ASTM B 213) von weniger als 60 sec/25g auf. Das Schüttgewicht (nach Scott, ASTM B 329) kann im Falle von Niobsuboxid- und Niobmetallpulvern vorteilhaft zwischen 0,7 und 1,3 g/cm$^3$, im Falle von Tantalmetallpulvern zwischen 1,0 und 2,5 g/cm$^3$, liegen. Die spezifische Oberfläche ("BET", ASTM D 3663) kann vorteilhaft zwischen 0,5 und 20 m$^2$/g betragen. Die erfindungsgemäßen Agglomeratpulver weisen vorzugsweise eine durch Quecksilberintrusion bestimmte Porosität (offene Poren) von 50 bis 70 Volumen-% auf, wobei mehr als 90% des Porenvolumens von Poren des Durchmessers von 0,1 und 5μm gebildet wird.

Der Gehalt an Verunreinigungen mit Ausnahme üblicher Dotiermittel wie Stickstoff, Phosphor und/oder Vanadium soll so niedrig wie möglich sein. Besonders bevorzugte Pulver weisen Gehalte an Fe, Cr, Ni, Cu, Alkalimetallen von weniger als 20 ppm sowie Fluorid und Chlorid von jeweils weniger als 50 ppm auf. Der Gehalt an Kohlenstoff liegt bevorzugt unterhalb 40 ppm. Vorteilhaft ist ein Gehalt an Stickstoff von 10 bis 6000 ppm. Phosphorgehalte in den erfindungsgemäßen Niobsuboxidpulvern sind im Allgemeinen nicht schädlich. In Niob- und Tantalmetallpulvern wird Phosphor bis 500 ppm zur Herabsetzung der Sinteraktivität während der Erzeugung der Sekundärstrukturen und der Anodenstruktur eingesetzt. Gegebenenfalls kann vor der Sinterung der Anodenstruktur eine Behandlung der Pulver mit Phosphorsäure, Ammoniumhydrogenphosphat oder Ammoniumphosphat erfolgen. Weitere, allerdings weniger kritische Verunreinigungen an Al, B, Ca, Mn und Ti liegen vorzugsweise unter 10 ppm, Si unterhalb 20 ppm.

Ein Kennzeichen der erfindungsgemäßen Agglomeratpulver ist ferner ein gegenüber Pulvern des Standes der Technik vergrößerter Verdichtungskoeffizient α und ein erhöhter Gleitkoeffizient η, die zu einer besseren Verpressbarkeit der Pulver führen. Vorzugsweise beträgt das Produkt BET-Oberfläche in m$^2$/g und Gleitkoeffizient im Falle der erfindungsgemäßen Niobsuboxidpulver 0,33 bis 0,75, vorzugsweise 0,45 bis 0,58, im Falle der erfindungsgemäßen Tantalpulver 0,62 bis 0,95, vorzugsweise 0,65 bis 0,86, und im Falle der erfindungsgemäßen Niobpulver 0,38 bis 0,8, vorzugsweise 0,42 bis 0,6. Der Verdichtungskoeffizient der erfindungsgemäßen Agglomeratpulver ist vorzugsweise größer als 0,07 für Niobsuboxidpulver und größer als 0,08 für Niob- und Tantalpulver.

Bevorzugt sind auch Niobsuboxid-Agglomeratpulver aus denen nach Pressen auf eine Pressdichte von 2,8 g/cm$^3$ und Sintern bei einer Temperatur von größer 1340°C, bevorzugt von größer 1400°C, über 20 Minuten Anodenkörper mit einer Skelettdichte von oberhalb 88%, vorzugsweise oberhalb 90%, insbesondere bevorzugt oberhalb 92%, herstellbar sind.

Bevorzugt sind ferner Tantal-Agglomeratpulver aus denen nach Pressen auf eine Pressdichte von größer 5 g/cm$^3$ und Sintern bei einer Temperatur von ≥ 1250°C über 20 Minuten ein Anodenkörper mit einer Skelettdichte von oberhalb 88%, vorzugsweise oberhalb 90%, insbesondere bevorzugt oberhalb 92%, herstellbar sind.

Bevorzugt sind auch Niob-Agglomeratpulver aus denen nach Pressen auf eine Pressdichte von 3,14 g/cm$^3$

und Sintern bei einer Temperatur von $\geq$ 1165°C, bevorzugt $\geq$ 1180°C über 20 Minuten ein Anodenkörper mit einer Skelettdichte von oberhalb 88% herstellbar sind.

Das erfindungsgemäße Verfahren umfasst ein Verfahren zur Herstellung von Ventilmetall- und/oder Ventilmetallsuboxid-Agglomeratpulvern, das dadurch gekennzeichnet ist, dass Vorläuferteilchen der Agglomeratpulver mit einem feinteiligem Porenbildner vermischt werden, durch Verdichten der Mischung und Verdampfen bzw. Zersetzen des Porenbildners ein porenreiches, adhäsiv gebundenes Agglomerat der Vorläuferteilchen erzeugt wird, das adhäsiv gebundene Agglomerat einer Temperaturbehandlung bei einer für die Ausbildung von Sinterbrücken ausreichenden Temperatur und Dauer unterzogen wird und das zumindest teilweise versinterte Agglomerat in an sich bekannter Weise zu Ventilmetall- und/oder Ventilmetalloxid-Agglomeratpulvern weiterverarbeitet wird.

Die Verdichtung der Mischung kann trocken durch Kompaktierung der Mischung unter Druck erfolgen oder naß durch Aufschlämmung der Mischung beispielsweise in Wasser, Verdichtung der Aufschlämmung mittels Ultraschall, Abgießen der überstehenden Flüssigkeit und Trocknen.

Vorzugsweise werden Tantal-, Niob- und/oder Niobsuboxid-Agglomerate der Formel $NbO_x$ mit $0,7<x<1,3$, besonders bevorzugt $0,8<x<1,1$ hergestellt.

Die erfindungsgemäß einzusetzenden Vorläuferteilchen sind vorzugsweise Primärteilchen oder nur aus wenigen Primärteilchen aufgebaute Sekundärteilchen von Ventilmetallen, insbesondere Niob und/oder Tantal, und/oder deren Oxide, insbesondere Pentoxide des Niob und/oder Tantal, mit mittleren Primärteilchengrößen kleiner als 1$\mu$m, weiter bevorzugt kleiner als 0,5 $\mu$m, insbesondere bevorzugt kleiner als 0,3 $\mu$m in Richtung der kleinsten Ausdehnung. Die Teilchen können beliebige Gestalt aufweisen. Vorzugsweise weisen die Vorläuferteilchen eine spezifische Oberfläche von oberhalb 80 m$^2$/g, insbesondere bevorzugt oberhalb von 100 m$^2$/g auf.

Besonders bevorzugt werden als Vorläuferteilchen Hydroxide bzw. hydratisierte Pentoxide, wie sie bei der Fällung aus wässrigen Niob- und/oder Tantalfluoridlösungen mit Ammoniak anfallen, die noch einen ausreichenden Wassergehalt von 25 bis 35 Gew.-% und eine spezifische Oberfläche von oberhalb 180 (im Falle von Nb) bzw. 100 m$^2$/g (im Falle von Ta) aufweisen, eingesetzt.

Als Porenbildner werden Ammoniumsalze wie Halogenide, Carbonate oder Oxalate bevorzugt. Besonders bevorzugt wird Ammoniumchlorid und/oder Ammoniumoxalat eingesetzt.

Die Porenbildner werden mit einer mittleren Teilchengröße von 0,5 bis 20$\mu$m, vorzugsweise 1,0 bis 10 $\mu$m, insbesondere bevorzugt 1,5 bis 5$\mu$m, in einer Menge von 10 bis 90 Volumen-%, vorzugsweise 15 bis 60 Volumen-%, weiter bevorzugt 20 bis 50 Volumen-%, besonders bevorzugt 30 bis 45 Volumen-%, bezogen auf das Volumen der Vorläuferteilchen eingesetzt.

Die Vorläuferteilchen werden bei nasser Verdichtung vorzugsweise mit Wasser aufgeschlämmt. Andere leicht verdampfende organische Flüssigkeiten mit guter Benetzung wie Methanol, Alkohole, Ketone und/oder Ester sowie deren Mischungen mit Wasser sind ebenfalls geeignet.

Mit der Aufschlämmung der Vorläuferteilchen wird der feinteilige Porenbildner intensiv vermischt. Anschließend wird die Mischung durch Rütteln, vorzugsweise mittels Ultraschall, verdichtet. Gegebenenfalls überstehende Flüssigkeit wird entfernt, so dass ein feuchter Kuchen entsteht.

Der feuchte, aus einer Mischung aus Vorläuferteilchen und Porenbildnerteilchen bestehende Kuchen wird anschließend durch langsames Erhitzen auf eine Temperatur von bis zu 150° C in einem Transportgasstrom getrocknet, und durch langsames weiteres Erhitzen auf 350 bis 600°C der Porenbildner vollständig aus dem Kuchen entfernt.

Alternativ können die Vorläuferteilchen mit dem feinteiligen Porenbildner nach intensiver trockener Vermischung bei einem Druck von 30 bis 100 bar verdichtet werden und anschließend entsprechend durch Erhitzen der Porenbildner entfernt werden.

Der trockene, aus adhäsiv gebundenen Vorläuferteilchen bestehende Kuchen wird, gegebenenfalls nach Brechung und Sieben, auf eine zur Ausbildung von Sinterbrücken ausreichende Temperatur erhitzt, so dass ein versintertes offenporiges Vorläuferagglomeratpulver mit hohem Porenvolumen entsteht, das im wesentlichen frei von geschlossenen Poren ist.

Das versinterte Vorläuferagglomeratpulver wird in an sich bekannter Weise, wie weiter unten beschrieben, zum Ventilmetall- und/oder Ventilmetallsuboxid-Agglomeratpulver weiter verarbeitet.

Ein alternatives Verfahren ist weiterhin ein Verfahren zur Herstellung von Ventilmetall- und/oder Ventilmetalloxid-Agglomeratpulvern, das dadurch gekennzeichnet ist, dass Vorläuferteilchen der Agglomeratpulver in Wasserstoffperoxid oder kohlendioxidhaltigem Wasser aufgeschlämmt werden, durch Trocknen das Wasser unter Freisetzung von Sauerstoffgas oder Kohlendioxid entfernt wird, so dass ein porenreiches, adhäsiv gebundenes Agglomerat der Vorläuferteilchen erzeugt wird, das adhäsiv gebundene Agglomerat einer Temperaturbehandlung bei einer für die Ausbildung von Sinterbrücken ausreichenden Temperatur und Dauer unterzogen wird und das zumindest teilweise versinterte Agglomerat in an sich bekannter Weise zu Ventilmetall- und/oder Ventilmetalloxid-Agglomeratpulvern weiterverarbeitet wird.

Während der Trocknung der Aufschlämmung wird dieser Wasser entzogen, wobei das Wasserstoffperoxid unter Freisetzung von Sauerstoffgas zersetzt wird bzw. die Löslichkeitsgrenze des Kohlendioxids in dem restlichen Wasser überschritten wird. Die feinteiligen Vorläuferteilchen in der Aufschlämmung wirken als Bläschenkeime für das freigesetzte Gas. Solange noch ausreichende Feuchtigkeit vorhanden ist, können die Bläschen nicht aus der Aufschlämmung entweichen oder zu großen Blasen agglomerieren, so dass ein offenporiger Kuchen mit großem Porenvolumen entsteht. Die Größe der durch die Bläschen gebildeten Poren und das Porenvolumen des Kuchens kann über die Menge an anfänglich gelöstem Kohlendioxid bzw. Wasserstoffperoxid gesteuert werden.

Die Herstellung der Aufschlämmung im Falle des Einsatzes von Kohlendioxid als Porenbildner kann auch so erfolgen, dass die Dispergierung der Vorläuferteilchen in Wasser unter Kohlendioxidatmosphäre erfolgt oder die bevorzugt einzusetzenden Hydroxide bzw. hydratisierten Pentoxide, wie sie bei der Fällung aus wässrigen Niob- und/oder Tantalfluoridlösungen mit Ammoniak anfallen, die noch einen ausreichenden Wassergehalt von 25 bis 35 Gew.-% und eine spezifische Oberfläche von oberhalb 100 $m^2$/g aufweisen, unter Kohlendioxidatmosphäre, gegebenenfalls unter Druck gerührt werden.

Der erhaltene, trockene Kuchen wird zur vollständigen Entfernung des Wassers auf eine Temperatur von 100 bis 500°C erhitzt.

Der getrocknete, aus adhäsiv gebundenen Vorläuferteilchen bestehende Kuchen wird, gegebenenfalls nach Brechung und Siebung, auf eine zur Ausbildung von Sinterbrücken ausreichende Temperatur erhitzt, so dass ein versintertes offenporiges Vorläuferagglomeratpulver entsteht, das im wesentlichen frei von geschlossenen Poren ist.

Sofern als Vorläuferpulver Niob- und/oder Tantalmetallpulver eingesetzt wurden, werden die daraus erhaltenen versinterten Vorläuferagglomeratpulver durch Vermischen mit Magnesiumspänen und Erhitzen in sauerstofffreier Atmosphäre oder im Hochvakuum desoxidiert und anschließend auf die gewünschte Agglomeratgröße gemahlen.

Gegebenfalls kann in an sich bekannter Weise eine Dotierung mit Stickstoff und/oder Phosphor und /oder Vanadium durch Tränkung mit Lösungen stickstoff- und/oder phosphor- oder vanadiumhaltiger Verbindungen vor der Desoxidation erfolgen.

Sofern als Vorläuferpulver Pentoxide eingesetzt wurden, werden diese in an sich bekannter Weise gemäß WO 00/67936, im Falle von Niobpentoxid vorzugsweise zunächst durch Erhitzen in wasserstoffhaltiger Atmosphäre zum Dioxid reduziert, mit gasförmigem Magnesium zum Metall reduziert und gegebenenfalls dotiert.

Zur Herstellung von $NbO_x$-Pulver mit der oben genannten Bedeutung von x wird von dem oben genannten Pentoxid-Vorläuferagglomeratpulver ausgegangen. Dieses wird gegebenenfalls nach Wasserstoff-Reduktion zum Dioxid mit einer stöchiometrischen Menge an entsprechend feinteiligem Niobmetallpulver innig vermischt und in wasserstoffhaltiger Atmosphäre erhitzt, so dass ein Sauerstoffaustausch zwischen dem Oxid und dem Metall erfolgt. Vorzugsweise wird als feinteiliges Niobmetallpulver ein erfindungsgemäß erhaltenes Niobmetall-Vorläuferagglomeratpulver eingesetzt.

Nach einem weiter bevorzugten Verfahren werden die Pentoxid-Vorläuferagglomeratpulver gegebenenfalls nach Wasserstoff-Reduktion gemeinsam mit dem Niobmetallpulver erneut mit Porenbildnern vermischt, verdichtet, der Porenbildner entfernt, gegebenenfalls gesiebt und das adhäsiv gebundene Pulvermischungsagglomerat in Wasserstoffatmosphäre erhitzt, um den Sauerstoffausgleich zu bewirken.

Die erfindungsgemäßen Niobsuboxid-, Niobmetall- und Tantalmetallpulver sind für die Herstellung von Festelektrolytkondensatoren mit spezifischen Kapazitäten von 20.000 bis 300.000 $\mu$FV/g und sehr geringen Restströmen von weniger als 1 nA/$\mu$FV, vorzugsweise weniger als 0,2 nA/$\mu$FV, nach üblichen Verfahren geeignet.

Dabei wird das Pulver zur Herstellung der Anodenkörper um einen in die Pressform eingelegten Niob- oder Tantaldraht in Gegenwart von Binde- und Gleitmittel bis zu einer Pressdichte von 2,3 bis 3,5 g/$cm^3$ im Falle von Niob- oder Niobsuboxidpulver bzw. 4,5 bis 7 g/$cm^3$ im Falle von Tantalpulver zu Grünkörpern verpresst, wobei die Grünkörper mit sehr günstiger Pressfestigkeit erhalten werden. Die den Kontaktdraht enthaltenden Presskörper werden anschließend vorzugsweise in einem Niob- oder Tantalschiffchen bei 1000 bis 1500°C über eine Sinterzeit von 10 bis 25 Minuten im Hochvakuum bei $10^{-8}$ bar gesintert. Die Sintertemperatur und Sinterzeit wird vorzugsweise so gewählt, dass die später aus der Kapazität des Kondensators berechenbare Kondensatoroberfläche noch 65 bis 45% der am Pulver gemessenen spezifischen Oberfläche aufweist.

Gegenstand der Erfindung sind weiterhin Kondensatoren, enthaltend einen Ventilmetall- und/oder Ventilmetallsuboxid-Kondensatoranodensinterkörper. Die erfindungsgemäßen Kondensatoren können in unterschiedlichen elektrischen Vorrichtungen eingesetzt werden.

Beispiele:

A) Herstellung der Vorläuferteilchen

V1: In eine Vorlage von 100 l deionisiertes Wasser werden über 15 Stunden kontinuierlich 75 l/h wässrige $H_2NbF_7$-Lösung mit einer Konzentration von 81 g/l Nb und 75 l/h 9%ige wässrige $NH_3$-Lösung gegeben, so dass der pH-Wert bei 7,6 ± 0,4 liegt. Die Temperatur der Lösung wird bei 63°C gehalten. Die erhaltene Suspension wird über eine Druckfilternutsche abfiltriert, mit 3%iger wässriger NH$_3$-Lösung und anschließend mit deionisiertem Wasser gewaschen. Das erhaltene feuchte Niob(V)hydroxid wird 24 Stunden bei 100°C im Trockenschrank getrocknet. Das erhaltene Niob(V)hydroxid hat eine spezifische Oberfläche von 201 m$^2$/g und sphärische Morphologie.

V2: Zu 100 Volumenteilen Niob(V)ethoxid-Lösung werden 40 Volumenteile deionisiertes Wasser unter Rühren zugegeben. Das ausgefällte Niob(V)hydroxid (Niobsäure) wird über eine Nutsche abfiltriert und mit deionisiertem Wasser gewaschen. Anschließend wird das Niob(V)hydroxid 17 Stunden bei 100°C getrocknet. Das Pulver hat eine spezifische Oberfläche von 130 g/m$^2$ und irreguläre Morphologie.

V3: Die Vorläuferteilchen V1 werden 4 Stunden bei 500°C an Luft kalziniert und danach in einer Strahlmühle auf D90 < 10µm (Mastersizer ohne Ultraschallbehandlung) aufgemahlen. Es wird ein Nb$_2$O$_5$ mit einer spezifischen Oberfläche von 89 m$^2$/g erhalten.

V4: In eine Vorlage von 100 l deionisiertem Wasser werden kontinuierlich über 30 Stunden 75 l/h einer wässrigen H$_2$TaF$_7$-Lösung mit einer Konzentration von 155,7 g/l Ta und kontinuierlich 75 l/h einer 9%igen wässrigen NH$_3$-Lösung gefördert, wobei der pH-Wert bei 7,6 ± 0,4 und die Temperatur der Lösung bei 69°C gehalten werden. Nach Abfiltrieren, Waschen mit 3%iger NH$_3$-Lösung und deionisiertem Wasser und Trocknen über 24 Stunden bei 100°C wird ein Tantal(V)hydroxid mit einer spezifischen Oberfläche von 106 m$^2$/g und sphärischer Morphologie erhalten.

V5: Die Vorläuferteilchen V4 werden 2 Stunden bei 500°C an Luft kalziniert und in einer Strahlmühle auf D90 < 10 µm aufgemahlen. Es wird ein Ta$_2$O$_5$-Pulver mit einer spezifischen Oberfläche von 83 m$^2$/g erhalten.

B) Herstellung versinterter Agglomerat-Pentoxidpulver (P1 - P14)

Zur Herstellung der versinterten Pentoxidpulver P1 bis P14 werden die in Tabelle 1, Spalte 1, angegebenen Vorläufer eingesetzt.

Die Vorläufer werden mit der in Tabelle 1, Spalte 3, angegebenen Menge (Gew.-% bezogen bezogen auf das Pentoxid) eines in Spalte 2 angegebenen Porenbildners mit einer mittleren Teilchengröße von 1,5 µm entweder in wässriger Suspension ("naß" in Spalte 4) oder trocken ("trocken" in Spalte 4) vermischt. Bei nasser Vermischung wird die Suspension der abgesetzten Feststoffmischung mittels Ultraschall verdichtet, überstehendes Wasser abgegossen und bei 110°C über 15 Stunden getrocknet. Bei trockener Vermischung wird die trockene Pulvermischung mit einer hydraulischen Laborpresse (Matrizendurchmesser 5 cm, Füllhöhe 3 cm) bei 75 bar über 1 Minute verdichtet.

Tabelle 1:

| Spalte | 1 | 2 | 3 | 4 | 5 | 6 |
|---|---|---|---|---|---|---|
| Pentoxid Nr. | Vorläufer | Porenbildner | Menge Gew.-% | Verdichtung | Tempern °C, h | Sintern °C, h |
| P1 | V1 | (NHa)$_2$(C$_2$O$_4$) | 30 | naß | 600,3 | 1300,5 |
| P2 | V1 | - | - | naß | 600,3 | 1300,5 |
| P3 | V2 | (NH$_4$)$_2$(C$_2$O$_4$) | 30 | naß | 600,3 | 1300,5 |
| P4 | V2 | - | - | naß | 600,3 | 1300,5 |
| P5 | V2 | (NH$_4$)$_2$(C$_2$O$_4$) | 40 | naß | 600,3 | 1300,5 |
| P6 | V2 | - | - | naß | 600,3 | 1300,5 |
| P7 | V3 | NH$_4$Cl | 30 | trocken | 600,2 | 1150, 5 |
| P8 | V3 | - | - | trocken | 600,2 | 1150, 5 |
| P9 | V4 | (NH$_4$)$_2$(C$_2$O$_4$) | 20 | naß | 600,3 | 1600,5 |
| P10 | V4 | - | - | naß | 600,3 | 1600,5 |
| P11 | V4 | NH$_4$Cl | 20 | trocken | 600,2 | 1450,5 |
| P12 | V4 | - | - | trocken | 600,2 | 1450,5 |
| P13 | V5 | NH$_4$Cl | 20 | trocken | 600,2 | 1600,5 |

(fortgesetzt)

| Spalte | 1 | 2 | 3 | 4 | 5 | 6 |
|--------|----|---|---|---------|-------|--------|
| P14 | V5 | - | - | trocken | 600,2 | 1600,5 |

Die getrockneten (adhäsiv gebundene Agglomerate) bzw. gepressten (Preßlinge) Pulvermischungen werden anschließend zur Zersetzung des Porenbildners auf die in Spalte 5 von Tabelle 1 angegeben Temperatur für die dort ebenfalls angegebene Zeit erhitzt. Danach folgt eine Versinterung bei der in Spalte 6 angegebenen Temperatur und Dauer an Luft.

Die Sinteragglomerate werden mit einem Backenbrecher zerkleinert, in einer Walzenmühle gemahlen und auf <300 $\mu$m gesiebt.

C) Herstellung von Metallpulvern (M1 bis M14)

Die Pentoxidpulver P1 bis P14 werden, im Falle von Niobpentoxid nach Reduktion zu Niobdioxid mittels Wasserstoff bei 1300°C, durch Reduktion mit Magnesiumdampf bei 900°C unter Argon als Transportgas über 6 Stunden, Abkühlen, Passivieren, Siebung unter 300 $\mu$m, Entfernung des Magnesiumoxids mittels 8%iger Schwefelsäure und Neutralwaschen mit deionisiertem Wasser in Metallpulver M1 bis M14 überführt. In Tabelle 2 sind die BET-Oberflächen, die D50-Werte nach Mastersizer (ohne Ultraschallbehandlung) und die Summen der Verunreinigungsgehalte an Eisen, Chrom und Nickel, an Fluor und Chlor und an Natrium und Kalium angegeben.

Tabelle 2:

| Pulver | M1 | M2 | M3 | M4 | M5 | M6 | M7 | M8 | M9 | M10 | M11 | M12 | M13 | M14 |
|--------|----|----|----|----|----|----|----|----|----|-----|-----|-----|-----|-----|
| BET, m$^2$/g | 6,5 | 6,7 | 5,7 | 5,6 | 5,5 | 5,4 | 8,1 | 7,8 | 4,8 | 4,4 | 6,2 | 5,9 | 5,3 | 5,4 |
| Fe+Cr+Ni, ppm | 8 | 9 | 5 | 8 | 10 | 11 | 8 | 6 | 9 | 7 | 10 | 5 | 4 | 7 |
| F+Cl, ppm | <5 | 6 | <5 | 6 | 5 | <5 | 9 | <5 | <5 | <5 | 9 | <5 | 8 | <5 |
| Na+K, ppm | <3 | <3 | <3 | 4 | <3 | <3 | <3 | <3 | <3 | 3 | <3 | <3 | <3 | <3 |
| D50, $\mu$m | 41 | 39 | 162 | 159 | 169 | 172 | 123 | 110 | 37 | 32 | 68 | 73 | 143 | 154 |

D) Herstellung von Niobsuboxidpulver (S1 bis S10)

Zur Herstellung der Niobsuboxidpulver werden jeweils das in Spalte 1 von Tabelle 3 angegebene Niobpentoxid mit der 3-fach stöchiometrischen Menge des in Spalte 2 von Tabelle 3 angegebenen Niobmetall und dem in Spalte 3 angegeben Porenbildner (20 Gew.-% bezogen auf Metall und Pentoxid) trocken vermischt, bei 75 bar verdichtet und über 3 Stunden bei 600°C zur Entfernung des Porenbildners getempert.

Der trockene Kuchen wird dann in Wasserstoffatmosphäre für 4 Stunden auf die in Tabelle 3 angegebene Umsetzungstemperatur erhitzt, abgekühlt, passiviert und auf <300 $\mu$m gesiebt. In Tabelle 6 sind die BET-Oberflächen, die D50-Werte nach Mastersizer (ohne Ultraschallbehandlung) und die Summen der Verunreinigungsgehalte an Eisen, Chrom und Nickel, an Fluor und Chlor und an Natrium und Kalium angegeben. Weiterhin sind der Verdichtungskoeffient $\alpha$ und der Gleitkoeffizient $\eta$, wie weiter unten definiert, sowie die Produkte von Gleitkoeffizient $\eta$ und der BET-Oberfläche angegeben.

Tabelle 3:

| Spalte | 1 | 2 | 3 | 4 |
|--------|----------|--------|--------------|------------------------|
| Suboxid | Pentoxid | Metall | Porenbildner | Umsetzungstemperatur °C |
| S1 | P3 | M3 | NH$_4$Cl | 1050 |
| S2 | P3 | M3 | NH$_4$Cl | 1250 |
| S3 | P3 | M3 | NH$_4$Cl | 1400 |
| S4 | P3 | M3 | NH$_4$Cl | 1500 |
| S5 | P3 | M3 | - | 1400 |

(fortgesetzt)

| Spalte | 1 | 2 | 3 | 4 |
|--------|-----|-----|------------------|------|
| S6 | P4 | M4 | $NH_4Cl$ | 1400 |
| S7 | P4 | M4 | - | 1400 |
| S8 | P3 | M2 | $NH_4Cl$ | 1400 |
| S9 | P1 | M1 | $NH_4Cl$ | 1400 |
| S10 | P2 | M2 | - | 1400 |

E) Herstellung von desoxidierten Metall-Agglomeratpulvern (D1 bis D14)

Die Pulver M1 bis M8, und M10 bis M14 werden zur Desoxidation jeweils durch Vermischen mit 8 (Niobmetallpulver) bzw. 5 Gew.-% (Tantalmetallpulver) Magnesiumspänen und einer zur Dotierung mit 100 ppm Phosphor ausreichenden Menge $NH_4H_2PO_4$-Lösung vermischt und unter Argon für 2 Stunden auf 850°C erhitzt, abgekühlt und passiviert, und auf <300 $\mu$m gesiebt. Zwei Proben des Pulvers M9 werden bei Temperaturen von 850 und 750°C desoxidiert und nachfolgend mit M9a und M9b bezeichnet. In den Tabellen 4 und 5 sind die BET-Oberflächen, die D50-Werte nach Mastersizer (ohne Ultraschallbehandlung) und die Summen der Verunreinigungsgehalte an Eisen, Chrom und Nickel, an Fluor und Chlor und an Natrium und Kalium angegeben. Weiterhin sind der Verdichtungskoeffizient $\alpha$ und der Gleitkoeffizient $\eta$, wie weiter unten definiert, sowie die Produkte von Gleitkoeffizient $\eta$ und der BET-Oberfläche angegeben.

F) Herstellung von Anodenkörpern

Aus den desoxidierten Metallpulvern D1 bis D14 und Niobsuboxidpulver S1 bis S8 werden Anodenkörper von 3,6 mm Durchmesser und einer Länge von 3,6 mm um einen in die Pressform eingelegten Tantaldraht von 0,3 mm Dicke auf die in Tabellen 4, 5 und 6 angegebene Pressdichte in g/cm$^3$ gepresst und anschließend im Hochvakuum über 20 Minuten bei der in den Tabellen angegeben Temperatur in °C gesintert.

Tabelle 4:

| Beispiel | 1 | 2 | 3 | 4 | 5 | 6 | 7 | 8 | 9 | 10 |
|----------|-----|-----|-----|-----|-----|-----|-----|-----|-----|-----|
| desoxidiertes Niob Metallpulver | D1 | D2 | D3 | | D4 | | D5 | D6 | D7 | D8 |
| Precursor Pulver | M1 | M2 | M3 | | M4 | | M5 | M6 | M7 | M8 |
| Fe+Cr+Ni, ppm | 7 | 7 | 4 | | 9 | | 9 | 12 | 7 | 7 |
| F+Cl, ppm | <5 | <5 | 5 | | <5 | | <5 | <5 | 9 | <5 |
| Na+K, ppm | <3 | <3 | <3 | | 3 | | <3 | <3 | <3 | <3 |
| D50, $\mu$m | 47 | 43 | 179 | | 163 | | 172 | 181 | 109 | 122 |
| D90, $\mu$m | 71 | 75 | 280 | | 299 | | 281 | 301 | 245 | 251 |
| Verdichtungskoeffizient $\alpha$ | 0,09 | 0,05 | 0,09 | | 0,06 | | 0,11 | 0,04 | 0,11 | 0,05 |
| Gleitkoeffizient $\eta$ | 0,33 | 0,19 | 0,39 | | 0,28 | | 0,41 | 0,25 | 0,11 | 0,08 |
| BET, m$^2$/g | 1,65 | 1,71 | 1,15 | | 1,09 | | 1,11 | 1,08 | 4,8 | 4,40 |
| $\eta$ x BET | 0,54 | 0,32 | 0,45 | | 0,31 | | 0,46 | 0,27 | 0,53 | 0,35 |
| Anoden: | | | | | | | | | | |
| Pressdichte, g/cm$^3$ | 3,14 | 3,14 | 3,14 | 3,14 | 3,14 | 3,14 | 3,14 | 3,14 | 3,14 | 3,14 |
| Sintertemp.,°C | 1165 | 1165 | 1165 | 1200 | 1165 | 1200 | 1165 | 1165 | 1165 | 1165 |
| Skelettdichte,% | 91 | 87 | 92 | 91 | 87 | 86 | 93 | 87 | 93 | 87 |

Tabelle 5:

| Beispiel | 11 | 12 | 13 | 14 | 15 | 16 | 17 | 18 | 19 | 20 |
|---|---|---|---|---|---|---|---|---|---|---|
| desoxidiertes Ta Metallpulver | D9a | D9b | D10 | D10 | D11 | D11 | D12 | D12 | D13 | D14 |
| Precursor Ta Pulver | M9a | M9b | M10 | M10 | M11 | M11 | M12 | M12 | M13 | M14 |
| Fe+Cr+Ni, ppm | 9 | 9 | 6 | 6 | 9 | 9 | 7 | 7 | 5 | 8 |
| F+Cl, ppm | <5 | <5 | <5 | <5 | 8 | 8 | <5 | <5 | 7 | <5 |
| Na+K, ppm | <3 | <3 | <3 | <3 | <3 | <3 | <3 | <3 | <3 | <3 |
| D50, $\mu$m | 36 | 35 | 33 | 33 | 73 | 73 | 67 | 67 | 162 | 159 |
| D50, $\mu$m | 63 | 58 | 55 | 55 | 152 | 152 | 159 | 159 | 258 | 241 |
| Verdichtungskoeffizient $\alpha$ | 0,10 | 0,09 | 0,06 | 0,06 | 0,09 | 0,09 | 0,06 | 0,06 | 0,09 | 0,05 |
| Gleitkoeffizient $\eta$ | 0,31 | 0,17 | 0,24 | 0,24 | 0,26 | 0,26 | 0,19 | 0,19 | 0,29 | 0,2 |
| BET m$^2$/g | 2,52 | 4,11 | 2,47 | 2,47 | 3,1 | 3,1 | 3,07 | 3,07 | 2,91 | 2,84 |
| $\eta$ x BET | 0,78 | 0,70 | 0,59 | 0,59 | 0,81 | 0,81 | 0,58 | 0,58 | 0,84 | 0,57 |
| Anoden: | | | | | | | | | | |
| Pressdichte, g/cm$^3$ | 5,0 | 5,0 | 5,0 | 5,75 | 5,0 | 5,75 | 5,0 | 5,0 | 5,75 | 5,75 |
| Sintertemp.,°C | 1250 | 1250 | 1250 | 1250 | 1250 | 1250 | 1250 | 1250 | 1250 | 1250 |
| Skelettdichte,% | 92 | 91 | 85 | 82 | 93 | 92 | 84 | 82 | 92 | 85 |

Tabelle 6:

| Beispiel | 21 | 22 | 23 | 24 | 25 | 26 | 27 | 28 | 29 | 30 | 31 | 32 | 33 | 34 |
|---|---|---|---|---|---|---|---|---|---|---|---|---|---|---|
| **Suboxid-Pulver** | S1 | S2 | S3 | S3 | S4 | S5 | S5 | S6 | S6 | S7 | S7 | S8 | S9 | S10 |
| Fe+Cr+Ni, ppm | 6 | 7 | 7 | 7 | 6 | <5 | <5 | <5 | <5 | <5 | <5 | 7 | 6 | <5 |
| F+Cl, ppm | 6 | <5 | 7 | 7 | 6 | <5 | <5 | <5 | <5 | <5 | <5 | 7 | 6 | <5 |
| Na+K, ppm | <3 | 3 | <3 | <3 | <3 | <3 | <3 | 3 | 3 | <3 | <3 | <3 | <3 | <3 |
| D50, $\mu$m | 151 | 168 | 181 | 181 | 195 | 171 | 171 | 189 | 189 | 178 | 178 | 101 | 59 | 51 |
| D50, $\mu$m | 261 | 273 | 269 | 269 | 298 | 281 | 281 | 279 | 279 | 271 | 271 | 210 | 94 | 82 |
| Verdichtungskoeffizient $\alpha$ | 0,12 | 0,12 | 0,13 | 0,13 | 0,12 | 0,11 | 0,11 | 0,09 | 0,09 | 0,06 | 0,06 | 0,09 | 0,09 | 0,05 |
| Gleitkoeffizient $\eta$ | 0,2 | 0,27 | 0,29 | 0,29 | 0,4 | 0,25 | 0,25 | 0,23 | 0,23 | 0,16 | 0,16 | 0,25 | 0,28 | 0,15 |
| BET m$^2$/g | 2,5 | 2 | 1,8 | 1,8 | 1,3 |  |  |  |  | 1,84 | 1,84 |  |  | 1,75 |
| $\eta$ x BET | 0,50 | 0,54 | 0,52 | 0,52 | 0,52 |  |  |  |  | 0,29 | 0,29 |  |  | 0,26 |
| **Anoden:** |  |  |  |  |  |  |  |  |  |  |  |  |  |  |
| Pressdichte, g/cm$^3$ | 2,8 | 2,8 | 2,8 | 2,8 | 2,8 | 2,8 | 2,8 | 2,8 | 2,8 | 2,8 | 2,8 | 2,8 | 2,8 | 2,8 |
| Sintertemp., °C | 1340 | 1340 | 1340 | 1460 | 1340 | 1340 | 1460 | 1340 | 1460 | 1340 | 1460 | 1340 | 1340 | 1340 |
| Skelettdichte, % | 96 | 94 | 94 | 93 | 94 | 93 | 91 | 90 | 89 | 87 | 86 | 92 | 94 | 85 |

Der Verdichtungskoeffizient α (Kompaktibilität α) und der Gleitkoeffizient η wurden in einem Powder Testing Center Model PTC-03DT der Firma KZK Powder Tech Corp., Chantilly, Virginia, USA, bestimmt.

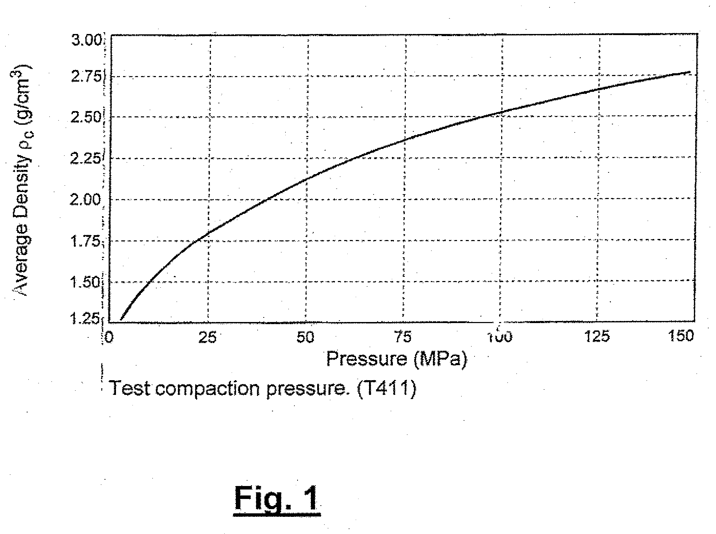

Die Bestimmung des Verdichtungskoeffizienten erfolgt so, dass Pulver (ohne Binder oder Gleitmittel) in eine Matrize von D = 12,7 mm Durchmesser eingefüllt und mit einem Pressstempel auf eine Höhe von H = 12,694 mm gepresst wird, wobei der Druck $p_c$ des Pressstempels während der Pressung gemessen wird. Ein typisches Diagramm, das die Abhängigkeit von Dichte und Kompressionsdruck einer Niobsuboxidprobe zeigt, ist in Fig. 1 wiedergegeben.

Der Verdichtungskoeffizient α ist durch die folgende Gleichung bestimmt:

$$|\log|\log \rho_{ra}|| = \alpha \log((p_r + p_0)/p_0) + |\log|\log \rho_{rp}||,$$

wobei $\rho_{rp}$ die Klopfdichte des Pulvers beschreibt, $\rho_{ra}$ die mittlere Dichte des Presskörpers nach Kompression unter dem Druck $p_r$ und $p_0$ den Gravitationsdruck des Pulvers (Gewicht des Pulvers dividiert durch die Querschnittsfläche der Matrize) beschreibt.

Zur Bestimmung des Gleitkoeffizienten wird zusätzlich der Druck $p_d$ am Boden der Matrize bei Erreichen einer Pressdichte von 4,8 g/cm³ im Falle von Tantal, 3,14 g/cm³ im Falle von Niob und 2,8 g/cm² in Falle von Niobsuboxid gemessen. Dabei ist der Gleitkoeffizient η durch folgende Gleichung bestimmt:

$$p_d/p_c = \eta^{SH/4F},$$

wobei S der Querschnittsumfang $\pi D$ und F die Querschnittsfläche $\pi D^2/4$ ist.

## Patentansprüche

1. Verfahren zur Herstellung von zur Herstellung von Kondensatoranodensinterkörpern geeigneten Ventilmetall- und/oder Ventilmetalloxid-Agglomeratpulvern, wobei das Ventilmetall Nb, Ta, Ti, Zr, Hf, V, Mo, W, Al und deren Mischungen und Legierungen umfasst, **dadurch gekennzeichnet, dass** Vorläuferteilchen der Agglomeratpulver mit feinteiligen Porenbildnern, die eine mittlere Teilchengröße von 0,5 bis 20 μm aufweisen, vermischt werden, durch Verdichten ein porenreiches, adhäsiv gebundenes Agglomerat der Vorläuferteilchen erzeugt wird, der Porenbildner thermisch entfernt, das adhäsiv gebundene Agglomerat einer Temperaturbehandlung bei einer für die Ausbildung von Sinterbrücken ausreichenden Temperatur und Dauer unterzogen wird und das zumindest teilweise versinterte Agglomerat zu Ventilmetall- und/oder Ventilmetallsuboxid-Agglomeratpulvern weiterverarbeitet wird, wobei als Vorläuferteilchen Hydroxide oder hydratisierte Pentoxide eingesetzt werden.

2. Verfahren nach Anspruch 1, **dadurch gekennzeichnet, dass** als Porenbilder Ammoniumsalze mit einer Verdampfungs-, Sublimations- oder Zersetzungstemperatur von unterhalb 600°C eingesetzt werden.

3. Verfahren nach Anspruch 2, **dadurch gekennzeichnet, dass** als Porenbildner feinteiliges Ammoniumchlorid und/oder Ammoniumoxalat eingesetzt wird.

4. Verfahren nach einem der Ansprüche 1 bis 3, **dadurch gekennzeichnet, dass** der Porenbildner in einer Menge von 10 bis 90 Vol.-% bezogen auf das Volumen der Vorläuferverbindung eingesetzt wird.

5. Ventilmetall- und/oder Ventilmetalloxid-Agglomeratpulver erhältlich gemäß einem Verfahren gemäß einem der Ansprüche 1 bis 4.

6. Niobsuboxid-Agglomeratpulver gemäß Anspruch 5, **dadurch gekennzeichnet, dass** das Pulver ein Produkt aus BET-Oberfläche in m²/g und Gleitkoeffizient π von 0,33 bis 0,75, vorzugsweise 0,45 bis 0,58, aufweist.

7. Niobsuboxid-Agglomeratpulver gemäß Anspruch 6 mit einem Verdichtungskoeffizienten α von größer als 0,07.

8. Tantal-Agglomeratpulver gemäß Anspruch 5, **dadurch gekennzeichnet, dass** das Pulver ein Produkt aus BET-Oberfläche in m²/g und Gleitkoeffizient η von 0,62 bis 0,95, vorzugsweise 0,65 bis 0,86, aufweist.

9. Tantal-Agglomeratpulver gemäß Anspruch 8, **dadurch gekennzeichnet, dass** es einen Verdichtungskoeffizienten

$\alpha$ von größer als 0,08 aufweist.

10. Niob-Agglomeratpulver <u>gemäß Anspruch 5</u>, **dadurch gekennzeichnet, dass** es ein Produkt aus BET-Oberfläche in m²/g und Gleitkoeffizient $\eta$ von 0,38 bis 0,8, vorzugsweise 0,42 bis 0,6, aufweist.

11. Niob-Agglomeratpulver <u>gemäß Anspruch 10</u>, **dadurch gekennzeichnet, dass** es einen Verdichtungskoeffizienten $\alpha$ von größer 0,08 aufweist.

12. Kondensatoranode, hergestellt, durch Pressen und Sintern eines Agglomeratpulvers nach einem der Ansprüche 5 bis 11.

13. Kondensator, enthaltend eine Kondensatoranode gemäß Anspruch 12.

14. Verwendung des Kondensators nach Anspruch 13 in elektrischen Vorrichtungen.


**Claims**

1. Process for producing valve metal and/or valve metal oxide agglomerate powders suitable for producing capacitor anode sintered bodies, where the valve metal comprises Nb, Ta, Ti, Zr, Hf, V, Mo, W, Al and mixtures and alloys thereof, **characterized in that** precursor particles of the agglomerate powders are mixed with finely divided pore formers which have an average particle size of from 0.5 to 20 $\mu$m, a highly porous, adhesively bonded agglomerate of the precursor particles is produced by densification, the pore former is removed thermally, the adhesively bonded agglomerate is subjected to a heat treatment at a temperature and for a time sufficient for the formation of sinter bridges and the at least partially sintered agglomerate is processed further to give valve metal and/or valve metal suboxide agglomerate powders, where hydroxides or hydrated pentoxides are used as precursor particles.

2. Process according to Claim 1, **characterized in that** ammonium salts having a vaporization, sublimation or decomposition temperature of less than 600°C are used as pore formers.

3. Process according to Claim 2, **characterized in that** finely divided ammonium chloride and/or ammonium oxalate is used as pore former.

4. Process according to any of Claims 1 to 3, **characterized in that** the pore former is used in an amount of from 10 to 90% by volume, based on the volume of the precursor compound.

5. Valve metal and/or valve metal oxide agglomerate powder obtainable by a process according to any of Claims 1 to 4.

6. Niobium suboxide agglomerate powder according to Claim 5, **characterized in that** the powder has a product of BET surface area in m²/g and coefficient of sliding friction $\eta$ of from 0.33 to 0.75, preferably from 0.45 to 0.58.

7. Niobium suboxide agglomerate powder according to Claim 6 having a densification coefficient $\alpha$ of greater than 0.07.

8. Tantalum agglomerate powder according to Claim 5, **characterized in that** the powder has a product of BET surface area in m²/g and coefficient of sliding friction $\eta$ of from 0.62 to 0.95, preferably from 0.65 to 0.86.

9. Tantalum agglomerate powder according to Claim 8, **characterized in that** it has a densification coefficient $\alpha$ of greater than 0.08.

10. Niobium agglomerate powder according to Claim 5, **characterized in that** it has a product of BET surface area in m²/g and coefficient of sliding friction $\eta$ of from 0.38 to 0.8, preferably from 0.42 to 0.6.

11. Niobium agglomerate powder according to Claim 10, **characterized in that** it has a densification coefficient $\alpha$ of greater than 0.08.

12. Capacitor anode produced by pressing and sintering an agglomerate powder according to any of Claims 5 to 11.

13. Capacitor containing a capacitor anode according to Claim 12.

**14.** Use of the capacitor according to Claim 13 in electric devices.

**Revendications**

**1.** Procédé de fabrication de poudres d'agglomérats de métaux à effet de valve et/ou d'oxydes de métaux à effet de valve appropriées pour la fabrication de corps frittés anodiques de condensateur, le métal à effet de valve comprenant Nb, Ta, Ti, Zr, Hf, V, Mo, W, Al et leurs mélanges et alliages, **caractérisé en ce que** des particules précurseurs des poudres d'agglomérats sont mélangées avec des agents de formation de pores finement divisés, qui présentent une taille de particules moyenne de 0,5 à 20 μm, un agglomérat des particules précurseurs riche en pores, lié par adhésion, est formé par compactage, l'agent de formation de pores est éliminé thermiquement, l'agglomérat lié par adhésion est soumis à un traitement thermique à une température et pendant une durée suffisantes pour la formation de ponts de frittage, et l'agglomérat au moins partiellement fritté est transformé en poudres d'agglomérats de métaux à effet de valve et/ou de sous-oxydes de métaux à effet de valve, des hydroxydes ou des pentoxydes hydratés étant utilisés en tant que particules précurseurs.

**2.** Procédé selon la revendication 1, **caractérisé en ce que** des sels d'ammonium ayant une température d'évaporation, de sublimation ou de décomposition inférieure à 600 °C sont utilisés en tant qu'agent de formation de pores.

**3.** Procédé selon la revendication 2, **caractérisé en ce que** du chlorure d'ammonium et/ou de l'oxalate d'ammonium finement divisés sont utilisés en tant qu'agent de formation de pores.

**4.** Procédé selon l'une quelconque des revendications 1 à 3, **caractérisé en ce que** l'agent de formation de pores est utilisé en une quantité de 10 à 90 % en volume, par rapport au volume du composé précurseur.

**5.** Poudre d'agglomérat de métal à effet de valve et/ou d'oxyde de métal à effet de valve pouvant être obtenue par un procédé selon l'une quelconque des revendications 1 à 4.

**6.** Poudre d'agglomérat de sous-oxyde de niobium selon la revendication 5, **caractérisée en ce que** la poudre présente un produit de la surface BET en $m^2/g$ et du coefficient de glissement $\eta$ de 0,33 à 0,75, de préférence de 0,45 à 0,58.

**7.** Poudre d'agglomérat de sous-oxyde de niobium selon la revendication 6, ayant un coefficient de compactage $\alpha$ supérieur à 0,07.

**8.** Poudre d'agglomérat de tantale selon la revendication 5, **caractérisée en ce que** la poudre présente un produit de la surface BET en $m^2/g$ et du coefficient de glissement $\eta$ de 0,62 à 0,95, de préférence de 0,65 à 0,86.

**9.** Poudre d'agglomérat de tantale selon la revendication 8, **caractérisée en ce qu'**elle présente un coefficient de compactage $\alpha$ supérieur à 0,08.

**10.** Poudre d'agglomérat de niobium selon la revendication 5, **caractérisée en ce qu'**elle présente un produit de la surface BET en $m^2/g$ et du coefficient de glissement $\eta$ de 0,38 à 0,8, de préférence de 0,42 à 0,6.

**11.** Poudre d'agglomérat de niobium selon la revendication 10, **caractérisée en ce qu'**elle présente un coefficient de compactage $\alpha$ supérieur à 0,08.

**12.** Anode de condensateur, fabriquée par compression et frittage d'une poudre d'agglomérat selon l'une quelconque des revendications 5 à 11.

**13.** Condensateur, contenant une anode de condensateur selon la revendication 12.

**14.** Utilisation du condensateur selon la revendication 13 dans des dispositifs électriques.

Test compaction pressure. (T411)

**Fig. 1**

**IN DER BESCHREIBUNG AUFGEFÜHRTE DOKUMENTE**

**In der Beschreibung aufgeführte Patentdokumente**

- DE 19855998 A1
- EP 1505611 A2
- EP 1291100 A1
- WO 2006057455 A
- WO 0067936 A